# EUROPÄISCHE PATENTANMELDUNG

(11) **EP 4 796 413 A1**
(43) Veröffentlichungstag der Anmeldung: **26.08.2026**
(21) Anmeldenummer: 26160289.0
(22) Anmeldetag: 24.02.2026
(51) Int. Cl.: B61D 35/00, B64D 11/02, B63B 29/14

(54) **KONFIGURIERBARE WC-ANORDNUNG FÜR PERSONENTRANSPORTMITTEL**

(30) Priorität: 24.02.2025 DE 102025106903
(71) Anmelder: Satek Gmbh, 73084 Salach (DE)
(72) Erfinder: KÖNIG, Thomas, 73230 Kirchheim unter Teck (DE)
(74) Vertreter: dompatent

(57) **Zusammenfassung**

Beschrieben wird eine konfigurierbare WC-Anordnung (10) für Personentransportmittel, insbesondere für Schienentransportmittel wie z.B. Schiebenfahrzeuge oder Triebfahrzeuge oder Personenwaggons, mit einem von einer Wand (14) umgebenen WC-Raum (12), der einen ersten WC-Teilraum (16) mit einer ersten Toilette (22) und einen zweiten WC-Teilraum (18) mit einer zweiten Toilette aufweist. Zwischen den beiden WC-Teilräumen (16,18) befindet sich ein Zwischenraum (20), der über eine erste Eingangstür (42) zugänglich ist. Über eine zweite Eingangstür (44) ist der zweite WC-Teilraum (18) zugänglich. In dem WC-Raum (12) ist eine Trennwand (46) zur wahlweisen Abtrennung des Zwischenraums (20) gegenüber dem ersten WC-Teilraum (16) oder dem zweiten WC-Teilraum (18) angeordnet, die zwischen einer ersten Verstellposition und einer zweiten Verstellposition verstellbar und in jeder der beiden Verstellpositionen arretierbar ist. In ihrer ersten Verstellposition gibt die Trennwand (46) den Zugang von dem Zwischenraum (20) zu dem ersten WC-Teilraum (16) hin frei und versperrt den Zugang zu dem zweiten WC-Teilraum (18) hin. In ihrer zweiten Verstellposition gibt die Trennwand (46) den Zugang von dem Zwischenraum (20) zu dem zweiten WC-Teilraum (18) hin frei und versperrt den Zugang zu dem ersten WC-Teilraum (16) hin. Die zweite Eingangstür (44) wird nun verriegelt, da der Zugang zur zweiten Toilette (32) über die erste Eingangstür (42) und den Zwischenraum (20) erfolgt. Der zweite WC-Teilraum (18) ist bei sich in zweiter Verstellposition befindlicher Trennwand (46) nicht mehr zugänglich. Diese Konstellation ist dann sinnvoll, wenn der zweite WC-Teilraum aufgrund eines Defekts nicht benutzt werden kann. Durch die Zuordnung des Zwischenraums (20) zum ersten WC-Teilraum bei defektem zweiten WC-Teilraum immer noch eine großflächige und geräumige WC-Kabine zur Verfügung gestellt werden.

## Beschreibung

Die Erfindung betrifft eine konfigurierbare WC-Anordnung für Personentransportmittel zu Land und/oder zu Wasser und/oder in der Luft, insbesondere für Schienentransportmittel wie z.B. Triebfahrzeuge oder Personenwaggons.

Die Toilettenanlagen von Personentransportmitteln sollten unter dem Aspekt der Barrierefreiheit u.a. über Universal-WC-Kabinen verfügen, die nach den gängigen Normen ausreichend geräumig sind, so dass sie von hinsichtlich ihrer Mobilität und/oder Beweglichkeit eingeschränkten Personen, insbesondere von Personen mit Rollstuhl, benutzt werden können. So ist beispielsweise nach den derzeitigen Normen gefordert, dass die sogenannte Universal-WC-Kabine über einen zylindrischen Freiraum von mindestens 1500 mm verfügen, der damit für die Manövrierung mit einem Rollstuhl ausreichend groß ist.

Aus verschiedenen Gründen wünschen die Betreiber von Personentransportmitteln, z.B. des ÖPNV, eine erhöhte Flexibilität im Falle einer außer Betrieb befindlichen Universal-WC-Kabine wegen z.B. Defekts und/oder Ausfalls einer Einbau- oder Sanitärkomponente oder eines vollen Abwassertanks oder eines leeren Frisch-/Toilettenspülwassertanks oder wegen Verschmutzung. Es ist mitunter gefordert, dass bei Ausfall einer Universal-WC-Kabine die Nutzung eines WCs durch hinsichtlich ihrer Mobilität/Beweglichkeit eingeschränkten Personen weiterhin möglich sein muss.

Aufgabe der Erfindung ist es, die WC-Anordnung für Personentransportmittel zu Land und/oder zu Wasser und/oder in der Luft, insbesondere für Schienentransportmittel wie z.B. Triebfahrzeugen oder Personenwaggons, konfigurierbar zu gestalten, wodurch der Ausfall eines WCs der WC-Anordnung durch die Nutzung eines zweiten WCs der WC-Anordnung kompensiert werden kann.

Zur Lösung dieser Aufgabe wird mit der Erfindung eine konfigurierbare WC-Anordnung für Personentransportmittel zu Land und/oder zu Wasser und/oder in der Luft, insbesondere für Schienentransportmittel wie z.B. Triebfahrzeuge, Schienenfahrzeuge oder Personenwaggons vorgeschlagen, wobei die konfigurierbare WC-Anordnung versehen ist mit
- einem von einer Wand umgebenen WC-Raum,
- wobei der WC-Raum einen ersten WC-Teilraum mit einer ersten Toilette und einen zweiten WC-Teilraum mit einer zweiten Toilette aufweist,
- einem Zwischenraum zwischen den beiden WC-Teilräumen,
- einer ersten Eingangstür in der den WC-Raum umgebenden Wand für den Zugang zu dem Zwischenraum und einer zweiten Eingangstür in der den WC-Raum umgebenden Wand für den Zugang zu dem zweiten WC-Teilraum, und
- einer in dem WC-Raum angeordneten Trennwand zur wahlweisen Abtrennung des Zwischenraums gegenüber dem ersten WC-Teilraum oder dem zweiten WC-Teilraum,
- wobei die Trennwand zwischen einer ersten Verstellposition und einer zweiten Verstellposition verstellbar und in jeder der beiden Verstellpositionen arretierbar ist,
- wobei die Trennwand in ihrer ersten Verstellposition den Zugang von dem Zwischenraum zu dem ersten WC-Teilraum hin freigibt und zu dem zweiten WC-Teilraum hin versperrt, womit der Zugang zu der ersten Toilette durch die erste Eingangstür sowie den Zwischenraum und der Zugang zu der zweiten Toilette durch die zweite Eingangstür gegeben ist, und
- wobei die Trennwand in ihrer zweiten Verstellposition den Zugang von dem Zwischenraum zu dem zweiten WC-Teilraum hin freigibt und zu dem ersten WC-Teilraum hin versperrt, womit bei verriegelter zweiter Eingangstür der Zugang zu der zweiten Toilette durch die erste Eingangstür sowie den Zwischenraum gegeben ist und kein Zugang durch die erste Eingangstür sowie den Zwischenraum zu der ersten Toilette möglich ist.

Die konfigurierbare WC-Anordnung nach der Erfindung weist einen von einer Wand umgebenen WC-Raum auf, der einen ersten WC-Teilraum mit einer ersten Toilette, einen zweiten WC-Teilraum mit einer zweiten Toilette und einen Zwischenraum zwischen den beiden WC-Teilräumen umfasst. Beide WC-Teilräume sind typischerweise auch mit weiteren Sanitäreinrichtungen wie Waschbecken, Seife- und Papierspender o.dgl. Sanitärkomponenten und, sofern die WC-Teilräume barrierefrei ausgestattet sind, mit speziellen Vorrichtungen für eingeschränkte Personen versehen. Zumindest einer der oder beide WC-Teilräume kann/können darüber hinaus auch eine Wickelauflage bzw. einen Wickeltisch (typischerweise klappbar) aufweisen.

Der Zugang zum WC-Raum erfolgt mittels zweier Eingangstüren, von denen die erste Eingangstür zum Zwischenraum führt und die zweite Eingangstür zum zweiten WC-Teilraum. Im WC-Raum der konfigurierbaren WC-Anordnung befindet sich ferner eine verschiebbare Trennwand zur wahlweisen Abtrennung des Zwischenraums gegenüber dem ersten WC-Teilraum oder dem zweiten WC-Teilraum. Dies erfolgt durch Verstellung der Trennwand in eine von zwei Verstellpositionen, in denen die Trennwand arretierbar ist. Damit ist es möglich, dass die Trennwand in ihrer ersten Verstellposition den Zugang von dem Zwischenraum zu dem ersten WC-Teilraum hin freigibt und zu dem zweiten WC-Teilraum hin versperrt, womit der Zugang zu der ersten Toilette durch die erste Eingangstür sowie den Zwischenraum und der Zugang zu der zweiten Toilette durch die zweite Eingangstür gegeben ist, während die Trennwand in ihrer zweiten Verstellposition den Zugang von dem Zwischenraum zu dem zweiten WC-Teilraum hin freigibt und zu dem ersten WC-Teilraum hin versperrt, womit bei verriegelter zweiter Eingangstür der Zugang zu der zweiten Toilette durch die erste Eingangstür sowie den Zwischenraum gegeben ist und kein Zugang durch die erste Eingangstür sowie den Zwischenraum zu der ersten Toilette möglich ist.

Die zweite Eingangstür wird nun verriegelt, da der Zugang zur zweiten Toilette über die erste Eingangstür und den Zwischenraum erfolgt. Der zweite WC-Teilraum ist bei sich in zweiter Verstellposition befindlicher Trennwand nicht mehr zugänglich. Diese Konstellation ist dann sinnvoll, wenn der zweite WC-Teilraum aufgrund eines Defekts nicht benutzt werden kann. Durch die Zuordnung des Zwischenraums zum ersten WC-Teilraum bei defektem zweiten WC-Teilraum immer noch eine großflächige und geräumige WC-Kabine zur Verfügung gestellt werden.

Mit dem erfindungsgemäßen Konzept ist es also möglich, den Zwischenraum der konfigurierbaren WC-Anordnung entweder dem ersten WC-Teilraum oder dem zweiten WC-Teilraum zuzuordnen. Hierdurch ist es möglich, wahlweise einen der beiden WC-Teilräume sozusagen zu vergrößern.

Die sich unter Einbeziehung des Zwischenraums ergebende WC-Kabine aus dem ersten bzw. zweiten WC-Teilraum und dem Zwischenraum ist nun größer dimensioniert als in dem Falle, in dem ihr der Zwischenraum nicht zugeordnet ist. Somit entstehen unter Einbeziehung des Zwischenraums zwei WC-Teilräume unterschiedlicher Größe. Eine dieser beiden somit konfigurierbaren WC-Kabinen ist also dann ausreichend groß, um beispielsweise neben einer Toilette auch noch für ausreichend Platz für ein Urinal zu sorgen. In beiden Verstellpositionen der Trennwand bildet allerdings bevorzugt die jeweils größere WC-Kabine eine Universal-WC-Kabine.

Das erfindungsgemäße Konzept erlaubt es den Betreibern von Personentransportmitteln, in dem Fall, dass die als Universal-WC-Kabine vorgesehene größere der beiden konfigurierbaren WC-Kabinen ausfällt, durch Verstellen der Trennwand die nicht mehr mögliche Nutzung des WC-Teilraums mit der außer Betrieb (s. oben) befindlichen Toilette oder mit defekten anderen sanitären Einrichtungen zu kompensieren, indem die Trennwand, die bis dahin den Zugang vom Zwischenraum zum anderen intakten WC-Teilraum versperrt hat, nunmehr den Zugang zu dem defekten WC-Teilraum versperrt und den Zugang zu dem noch intakten anderen WC-Teilraum freigibt.

In vorteilhafter Ausgestaltung der Erfindung kann vorgesehen sein, dass die verstellbare Trennwand verschwenkbar ist und/oder linear oder längs einer gekrümmten Linie, insbesondere längs einer Teilkreislinie, verschiebbar ist und/oder klappbar ist. Es existieren also verschiedene Möglichkeiten, wie die Trennwand aus der einen Verstellposition in die andere Verstellposition überführbar ist.

In weiterer vorteilhafter Ausgestaltung der Erfindung kann vorgesehen sein, dass bei in der ersten Verstellposition befindlicher Trennwand der erste WC-Teilraum zusammen mit dem Zwischenraum eine Universal-WC-Kabine für die Benutzung von bezüglich ihrer Mobilität eingeschränkten Personen, insbesondere von Personen mit Rollstuhl, bildet und der zweite WC-Teilraum eine Normal/Standard-WC-Kabine bildet und dass bei in der zweiten Verstellposition befindlicher Trennwand der erste WC-Teilraum eine Normal/Standard-WC-Kabine bildet und der zweite WC-Teilraum zusammen mit dem Zwischenraum eine Universal-WC-Kabine für die Benutzung von bezüglich ihrer Mobilität eingeschränkten Personen, insbesondere von Personen mit Rollstuhl, bildet. Dabei handelt es sich um die hauptsächlich interessante Anwendung der erfindungsgemäßen konfigurierbaren WC-Anordnung.

Dabei ist mit Vorteil vorgesehen, dass dass der Zwischenraum mindestens so groß ist wie der von Hindernissen freie Raum innerhalb einer Universal-WC-Kabine, insbesondere so groß ist wie der von Hindernissen freie Raum zwischen der Eingangstür und der Toilette einer Universal-WC-Kabine.

In weiterer vorteilhafter Ausgestaltung der Erfindung ist es zweckmäßig, dass der Zwischenraum kreiszylindrisch ist, dass die Trennwand bogenförmig und längs der gedachten Umfangswand des kreiszylindrischen Zwischenraums verschiebbar und in den beiden Verstellpositionen arretierbar ist und dass die erste Eingangstür eine bogenförmige, insbesondere teilkreislinienförmig gekrümmte Schiebetür ist.

Bei der zuvor beschriebenen Ausgestaltung der Erfindung ist es ferner von Vorteil, wenn die Schiebetür längs der bogenförmigen Trennwand in deren jeweiliger Verstellposition zum Öffnen und zum Schließen verschiebbar ist.

Je nachdem, in welcher Position sich die Trennwand befindet, lässt sich also die erste Eingangstür, die als Schiebetür ausgeführt ist, längs der Trennwand verschieben. Mit anderen Worten also gibt die Schiebetür (erste Eingangstür) in jeder der beiden arretierbaren Verstellpositionen der Trennwand den Zugang zum WC des betreffenden WC-Teilraums frei, wenn die Schiebetür geöffnet ist. Alternativ dazu ist es aber auch möglich, dass die Schiebetür in beiden Verstellpositionen der Trennwand in gleicher Richtung zum Öffnen bzw. zum Verschließen verschoben wird.

Zweckmäßig ist es ferner, wenn die Trennwand und die erste Eingangstür jeweils eine separate Führungsvorrichtung zum Verschieben der Trennwand zwischen deren beiden Verstellpositionen und zum Verschieben der ersten Eingangstür zwecks Öffnens und Schließens derselben aufweisen.

Alternativ zum zuvor gesagten kann die Trennwand eben und innerhalb des WC-Raums zwischen den beiden Verstellpositionen entlang von Führungselementen parallel oder seitlich verschiebbar sein. In all den zuvor genannten Fällen der Beweglichkeit der Trennwand können entsprechende Führungsvorrichtungen bzw. Führungselemente am bzw. im Boden und/oder an bzw. in der Decke und/oder an oder in der Wand angeordnet sein.

Alternativ zu einer verschiebbaren Trennwand ist es auch möglich, dass die Trennwand in dem WC-Raum vorzugsweise innerhalb von dessen der ersten Eingangstür gegenüberliegenden Abschnitt schwenkbar gelagert oder nach Art einer Anschlagtür ausgebildet ist und zwischen den beiden Verstellpositionen verschwenkbar und insbesondere bzgl. ihrer Breite veränderbar ist. Die Breitenveränderung kann je nach Ausgestaltung der Geometrie des Zwischenraums und der Eingangstür erforderlich sein.

Schließlich kann auch vorgesehen sein, dass seitlich beider Toiletten jeweils zumindest eine verschwenkbare, wahlweise von der Wand abstehende oder an die Wand geklappte, Stützstange angeordnet ist oder dass beidseitig beider Toiletten jeweils zwei Stützstangen angeordnet sind, von denen die eine verschwenkbar und wahlweise von der Wand abstehend oder an die Wand klappbar ist und die andere feststehend angeordnet ist.

In weiterer Ausgestaltung der Erfindung kann die zweite Eingangstür eine Anschlagtür oder eine Schiebetür oder eine Falttür sein.

Hinsichtlich der bequemeren Zugänglichkeit zum WC-Raum von außerhalb der diesen umgebenden Wand kann es von Vorteil sein, wenn die Abschnitte der den WC-Raum umgebenden Wand beidseitig der ersten Eingangstür zu dieser hin schräg zum Inneren des WC-Raums gerichtet verlaufen. In Schienenfahrzeugen ist der Gang neben WC-Anlagen mitunter recht schmal. Wenn sich also, wie mit dem zuvor gesagten Ansatz verfolgt, der Gang beidseitig der ersten Eingangstür, die zweckmäßigerweise als bogenförmige, teilzylindrische Tür ausgebildet ist, verbreitern lässt, ist dies für den bequemeren Zugang zur WC-Anordnung von Vorteil, und zwar insbesondere für Personen mit Rollstuhl.

Die Erfindung beschreibt eine flexible, konfigurierbare WC-Anordnung für Personentransportmittel, insbesondere für Schienenfahrzeuge, die sicherstellt, dass trotz eines Ausfalls oder eines Außer-Betrieb-Setzens einer Toilette oder von dieser Toilette zugeordneten Sanitäreinrichtungen stets eine insbesondere barrierefreie Universal-WC-Kabine verfügbar bleibt. Dies wird durch eine intelligente räumliche Struktur aus zwei WC-Teilräumen und einem dazwischenliegenden Zwischenraum erreicht, der über eine verstellbare Trennwand mit jeweils einer der beiden WC-Teilräume verbunden werden kann, während er gleichzeitig durch die Trennwand von dem anderen WC-Teilraum getrennt ist. Dieses Konzept ermöglicht eine hohe Betriebssicherheit, da jeweils eine insbesondere barrierefreie Kabine verfügbar ist. Es erlaubt eine maximale Flexibilität, da je nach Situation (beispielsweisen wegen Defekts, Reinigung oder Ausfalls) die Konfiguration umgestellt werden kann. Durch die Gestaltung des Zwischenraums und der Türgeometrie, teilweise bogenförmig oder kreiszylindrisch, ist ausreichend Rangierplatz für Rollstuhlnutzer gewährleistet. Die erfindungsgemäße Konstruktion ist unabhängig vom Fahrzeugtyp und Türmechanik realisierbar. Die Erfindung schafft ein modulares, robustes und betrieblich sinnvolles WC-System, das Ausfälle kompensiert, insbesondere barrierefreie Nutzung sicherstellt und den Platz in Fahrzeugen optimal nutzt. Ihr Kern liegt in der kombinatorischen Flexibilität von Zwischenraum und Trennwand, die eine durchdachte, zuverlässige Konfiguration ermöglicht.

Die Erfindung wird nachfolgend anhand zweier Ausführungsbeispiele und unter Bezugnahme auf die Zeichnungen näher erläutert. Im Einzelnen zeigen dabei:

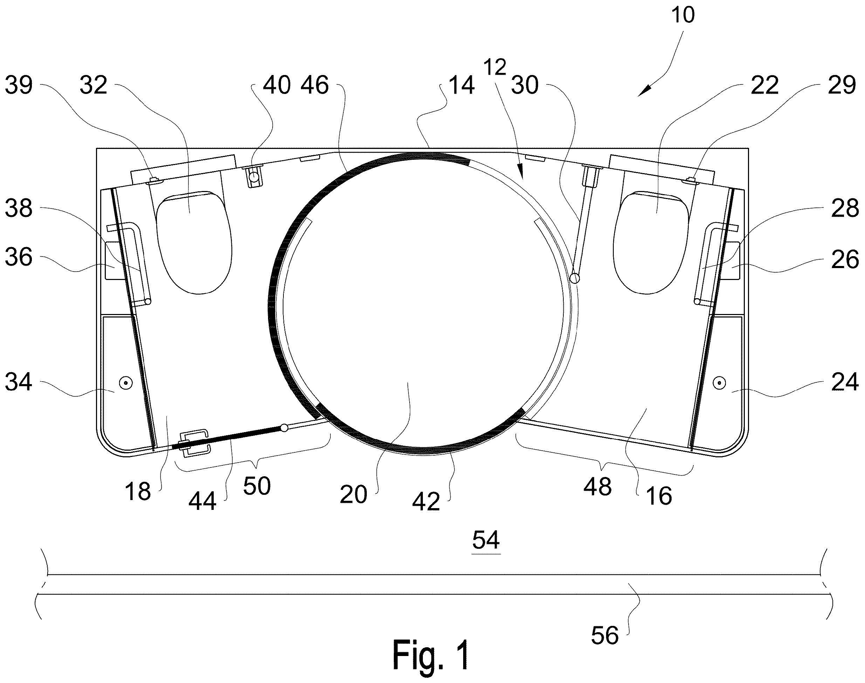

- Fig. 1: den Grundriss einer konfigurierbaren WC-Anordnung gemäß einem ersten Ausführungsbeispiel in der Konstellation mit einer Universal-WC-Kabine (siehe rechts) und einer Normal/Standard-WC-Kabine (siehe links), wobei die Eingangstüren zu beiden WC-Kabinen geschlossen sind,
- Fig.: 2 den Grundriss gemäß Fig. 1 für die Situation, in der beide Eingangstüren geöffnet sind,
- Fig.: 3 den Grundriss der WC-Anordnung, bei der das linke WC durch die bogenförmige Eingangstür zugänglich ist und das rechte WC durch die Trennwand versperrt ist, das linke WC nun also Teil einer Universal-WC-Kabine ist,
- Fig. 4: den Grundriss einer konfigurierbaren WC-Anordnung gemäß einem zweiten Ausführungsbeispiel mit einer Normal/Standard-WC-Kabine mit Urinal (siehe rechts), und einer Normal/Standard-WC-Kabine ohne Urinal (siehe links), wobei die Eingangstüren zu beiden WC-Kabinen geschlossen sind,
- Fig.: 5 den Grundriss gemäß Fig. 4 für die Situation, in der beide Eingangstüren geöffnet sind,
- Fig. 6: den Grundriss der WC-Anordnung, bei der das linke WC durch die bogenförmige Eingangstür zugänglich ist und das rechte WC durch die Trennwand versperrt ist.

In den Figuren 1-3 ist ein erstes Ausführungsbeispiel der erfindungsgemäßen konfigurierbaren WC-Anordnung 10 gezeigt. Die WC-Anordnung weist einen WC-Raum 12 mit einer diesen umgebenden Wand 14 auf, wobei der WC-Raum 12 einen ersten WC-Teilraum 16, einen zweiten WC-Teilraum 18 sowie einen Zwischenraum 20 zwischen den beiden WC-Teilräumen umfasst. Der erste WC-Teilraum 16 weist eine erste Toilette 22 (erstes Toilettenbecken) und Sanitäreinrichtungen wie u.a. ein Waschbecken 24 mit Wasserhahn, ggf. einen Wickeltisch (im Einzelnen nicht dargestellt), Seifen- und Handtuchspender 26 und zwei Haltestangen 28, 30 zu beiden Seiten der ersten Toilette 22 und einen Drücker 29 für die Toilettenspülung, Taster für Notruf und/oder Türöffnung etc. (nicht dargestellt) auf. Bei der Haltestange 30 handelt es sich um eine klappbare Haltestange, die wahlweise von der Wand abstehend angeordnet ist oder aber gegen die Wand hoch- bzw. runtergeklappt ist. Der zweite WC-Teilraum weist eine zweite Toilette 32 (zweites Toilettenbecken) und Sanitäreinrichtungen wie u.a. ein Waschbecken 34 mit Wasserhahn, ggf. einen Wickeltisch (im Einzelnen nicht dargestellt), Seifen- und Handtuchspender 36 und zwei Haltestangen 38, 40 zu beiden Seiten der zweiten Toilette 32 sowie einen Drücker 39 für die Toilettenspülung auf.

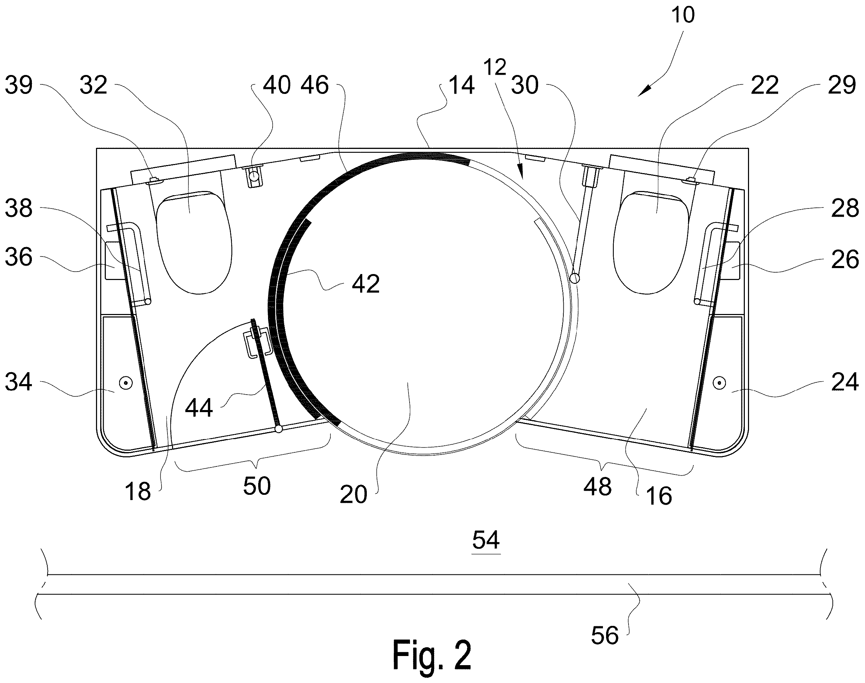

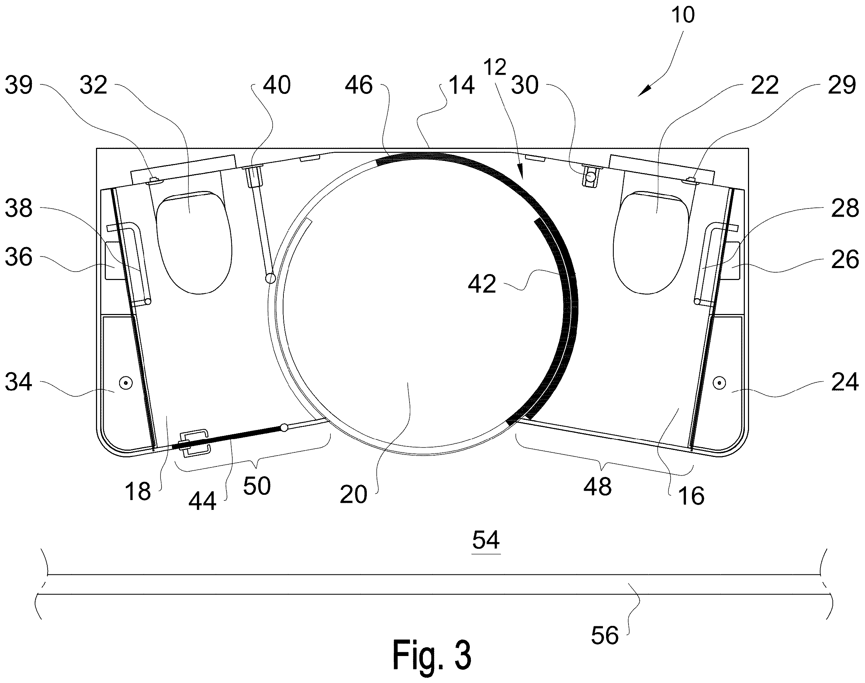

Für den Zugang zum WC-Raum 12 von außerhalb der Wand 14 sind zwei Eingangstüren vorgesehen, und zwar eine erste Eingangstür 42, die den Eintritt in den Zwischenraum 20 ermöglicht, und eine zweite Eingangstür 44 für den Zugang zum zweiten WC-Teilraum 18. Innerhalb des WC-Raums 12 ist eine Trennwand 46 angeordnet. Mit der Trennwand 46 kann wahlweise einer der beiden WC-Teilräume gegenüber dem Zwischenraum 20 versperrt werden, während der andere der beiden WC-Teilräume zum Zwischenraum 20 hin offen ist. Hierzu ist die Trennwand 46 in zwei Verstellpositionen verstellbar und arretierbar, wie es in den Figuren 1 bzw. 2 einerseits und Fig. 3 andererseits gezeigt ist.

In diesem ersten Ausführungsbeispiel sind die beiden WC-Teilräume derart konzipiert, dass jeder WC-Teilraum 16, 18 zusammen mit dem Zwischenraum 20 eine Universal-WC-Kabine bildet. In Fig. 1 wird diese Universal-WC-Kabine von dem ersten WC-Teilraum 16 und dem Zwischenraum 20 gebildet, da die Trennwand 46 in ihrer in Fig. 1 gezeigten ersten Verstellposition diese beiden Räume miteinander verbindet und den Zwischenraum 20 gegenüber dem zweiten WC-Teilraum versperrt. Der Zugang zur ersten Toilette 22 erfolgt nun über die erste Eingangstür 42, während der Zugang zur zweiten Toilette 32, die in diesem Ausführungsbeispiel Teil einer Normal/Standard/WC-Kabine ist, durch die zweite Eingangstür 44 erfolgt (s. Fig. 2). In der Konstellation gemäß Fig. 3, in der sich die Trennwand in ihrer zweiten Verstellposition befindet und womit der erste WC-Teilraum 16 gegenüber dem Zwischenraum 22 versperrt ist, bilden der Zwischenraum 20 und der zweite WC-Teilraum 18 die Universal-WC-Kabine, die nun bei geöffneter Eingangstür 42 zugänglich ist. In dieser Situation ist die zweite Eingangstür 44 verriegelt, kann also weder von außen noch von innen geöffnet werden.

Im Ausführungsbeispiel nach den Figuren 1-3 handelt es sich bei dem Zwischenraum 20 um einen kreiszylindrischen Raum. Die Trennwand 46 ist bogenförmig ausgebildet und erstreckt sich über eine Teilkreislinie. Der zylindrische Zwischenraum 20 ist eines der Konstruktionsmerkmale einer Universal-WC-Kabine, was dem Fachmann bekannt ist.

Wie anhand der Figuren 1-3 zu erkennen ist, verläuft die Wand 14 innerhalb ihrer vorderen, beidseitig der ersten Eingangstür 52 angeordneten Abschnitte 48, 50 (innerhalb des Abschnitts 50 befindet sich in diesem Ausführungsbeispiel die zweite Eingangstür 44, was aber nicht zwingend der Fall sein muss) schräg zum Inneren des WC-Raums 12. Diese beiden Abschnitte 48, 50 der Wand 14 sind somit gegenüber der ersten Eingangstür 42 zurückversetzt, womit beidseitig der ersten Eingangstür 42 innerhalb des Gangbereichs 54 zwischen der WC-Anordnung 10 und dem gegenüberliegenden Wandabschnitt 56 des beispielsweise Personenwaggons ein vergrößerter Platz besteht, der es ermöglicht, dass insbesondere Personen mit Rollstuhl bei geöffneter erster Eingangstür bequemer in den Zwischenraum 20 gelangen.

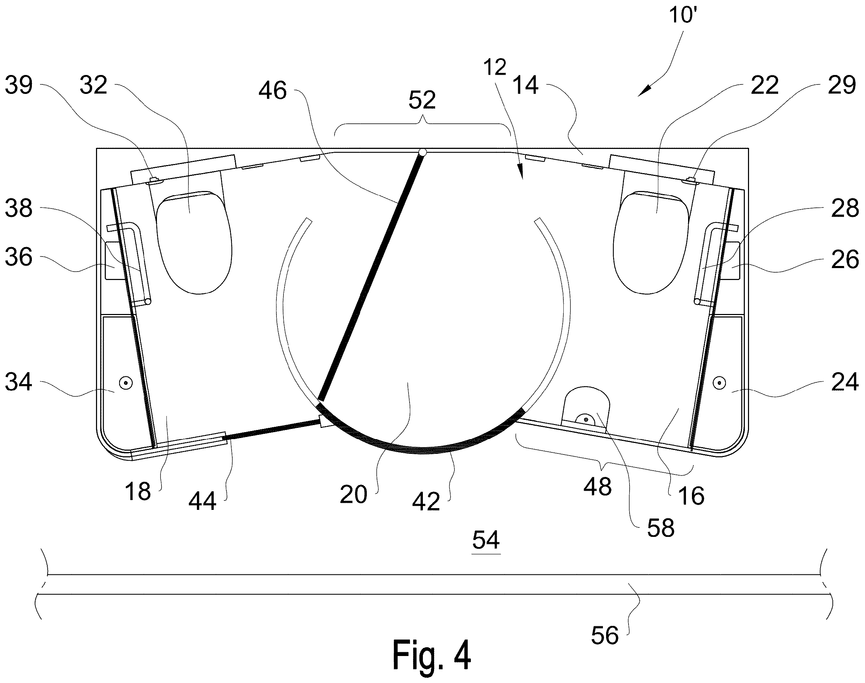

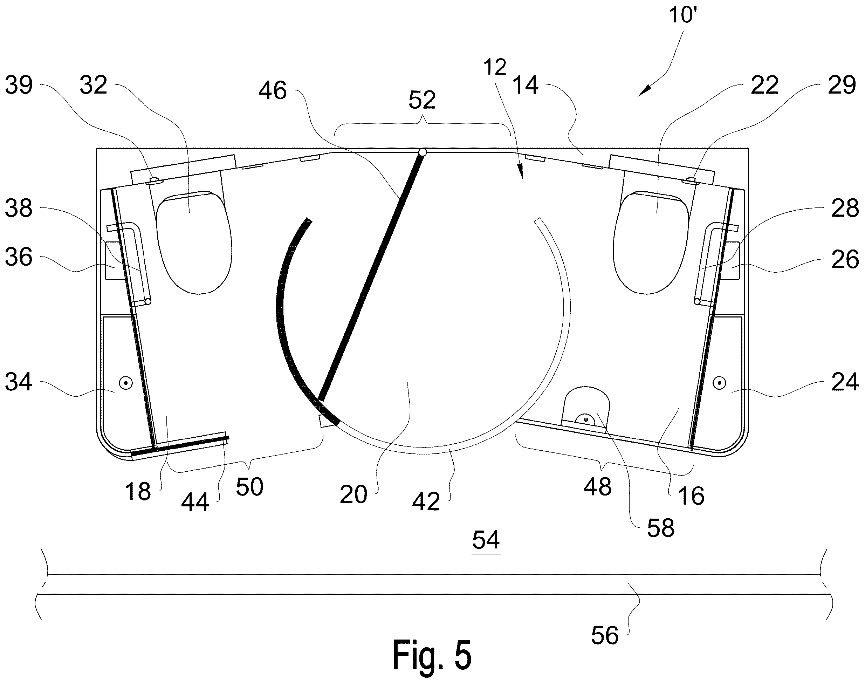

Anhand der Figuren 4-6 wird nachfolgend noch ein zweites Ausführungsbeispiel der Erfindung beschrieben.

Die Elemente der WC-Anordnung 10 dieses zweiten Ausführungsbeispiels, die gleich bzw. funktionsgleich mit den Elementen der WC-Anordnung 10 der Figuren 1-3 sind, sind in den Figuren 4-6 mit den gleichen Bezugszeichen versehen.

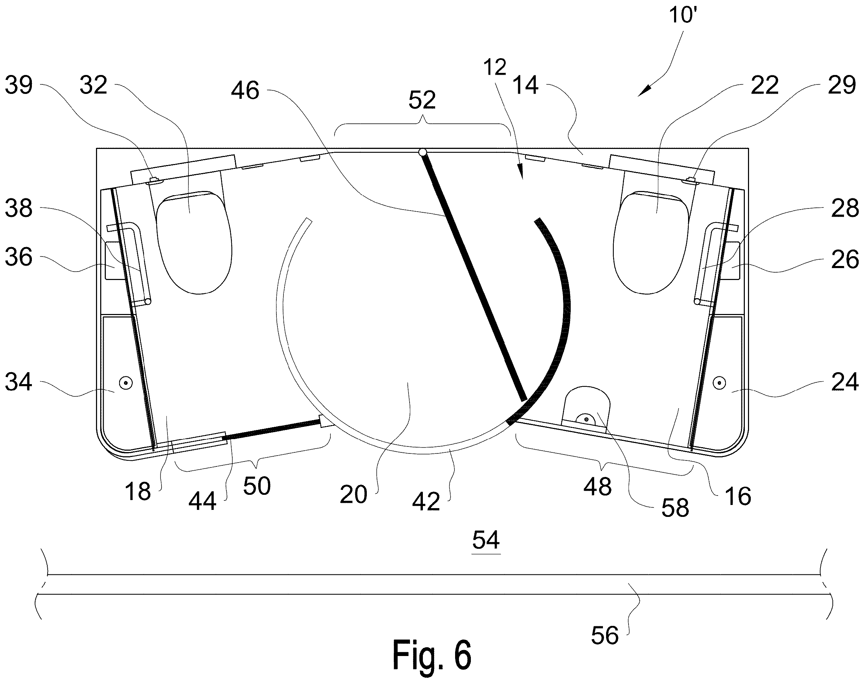

Das Konzept der WC-Anordnung 10' der Figuren 4-6 folgt dem gleichen Gedanken wie bei der WC-Anordnung 10. Die beiden WC-Teilräume 16 lassen sich wahlweise mit dem Zwischenraum 20 zu einer WC-Kabinenanordnung kombinieren, bei der eine Kabinenanordnung größer ist als die andere. In Fig. 4 bilden der erste WC-Teilraum 16 und der Zwischenraum 20 eine größere WC-Kabine. In dem Ausführungsbeispiel gemäß den Figuren 4-6 ist die Trennwand 46 als schwenkbare ebene Wand ausgeführt, die in demjenigen Abschnitt 52 der Wand 14 um eine horizontale Achse angelenkt ist, der der ersten Eingangstür 42 gegenüberliegt. Die Trennwand 46 ist somit nach Art einer Anschlagtür ausgebildet. Innerhalb des ersten WC-Teilraums 16 befindet sich zusätzlich noch ein Urinal 58. Die zweite Eingangstür 44 ist in diesem Ausführungsbeispiel als Schiebetür ausgeführt. Bei der Konfiguration gemäß Fig. 4 ist die erste Toilette 22 sowie das Urinal 58 über die erste Eingangstür 42 und den Zwischenraum 20 zugänglich, während die zweite Toilette 32 ausschließlich über die zweite Eingangstür 44 zugänglich ist. In der Situation gemäß Fig. 6 ist die zweite Eingangstür 44 verriegelt, lässt sich also nicht öffnen. Die Trennwand 46 befindet sich in ihrer zweiten Verstellposition, in der sie den Zugang vom Zwischenraum 20 zur ersten Toilette 22 versperrt und zur zweiten Toilette 32 hin freigibt.

Die beiden zuvor beschriebenen Ausführungsbeispiele können auch durch andersartig gestaltete Eingangstüren als in den Figuren gezeigt realisiert werden. So bedarf es beispielsweise für die Erfindung nicht zwingend einer bogenförmigen teilzylindrischen Eingangstür zum Zwischenraum. Auch brauchen die Wandabschnitte beidseitig der ersten Eingangstür nicht zwingend gegenüber der Eingangstür zurückzuspringen. Der Zwischenraum braucht darüber hinaus nicht zwingend kreiszylindrisch oder rund zu sein. Er kann jedwede Geometrie aufweisen. Für eine Universal-WC-Kabine wird, wie oben beschrieben, nach den derzeitig geltenden Vorschriften ein von Hindernissen freier Bereich von im Durchmesser mindestens 1500 mm gefordert, der allerdings beispielsweise auch in einem quadratischen oder rechteckigen Zwischenraum frei gehalten sein kann. Die Trennwand gemäß dem zweiten Ausführungsbeispiel kann, bezogen auf die Figuren 4-6, beispielsweise weiter links oder auch weiter rechts angelenkt sein. Je nach Ausgestaltung der WC-Anordnung und des WC-Raums sollte die Trennwand in ihrer Breite veränderbar sein, um in beiden Verstellpositionen den Zugang zu einer der beiden Toiletten versperren zu können. Die Trennwand befindet sich in ihren beiden Verstellpositionen beispielsweise an jeweils einem Innenrand nahe der ersten Eingangstür und erstreckt sich bis zur gegenüberliegenden rückwärtigen Wand des WC-Raums. An diesen beiden Stellen schließt die Trennwand gegenüber der Innenseite der den WC-Raum umgebenden Rand im Wesentlichen dichtend ab und versperrt den Zugang zu dem Bereich hinter der Trennwand.

In den Figuren sind die Führungselemente und Führungsvorrichtungen zum Verschieben/Verschwenken bzw. Bewegen sowohl der Trennwand als auch der Eingangstüren als im Bodenbereich des WC-Raums befindlich lediglich angedeutet. Der Fachmann wird für die Beweglichkeit dieser Komponenten der konfigurierbaren WC-Anordnung die konstruktiv vorteilhafteste Form der Lagerung dieser verschiebbaren Komponenten wählen, und zwar insbesondere unter dem Aspekt der Reinigung, Langlebigkeit und der Forderung nach gefahrloser Begehbarkeit des Bodens der WC-Kabine.

### BEZUGSZEICHENLISTE

- 10: WC-Anordnung
- 10': WC-Anordnung
- 12: WC-Raum
- 14: Wand um WC-Anordnung
- 16: erster WC-Teilraum
- 18: zweiter WC-Teilraum
- 20: Zwischenraum
- 22: erste Toilette
- 24: Waschbecken
- 26: Spender
- 28: Haltestange
- 29: Drücker
- 30: Haltestange
- 32: zweite Toilette
- 34: Waschbecken
- 36: Spender
- 38: Haltestange
- 39: Drücker
- 40: Haltestange
- 42: erste Eingangstür
- 44: zweite Eingangstür
- 46: Trennwand
- 48: Wandabschnitt
- 50: Wandabschnitt
- 52: Wandabschnitt gegenüber der ersten Eingangstür
- 54: Gangbereich
- 56: Wand z.B. eines Personenwaggons
- 58: Urinal

## Patentansprüche

1. Konfigurierbare WC-Anordnung für Personentransportmittel zu Land und/oder zu Wasser und/oder in der Luft, insbesondere für Schienentransportmittel wie z.B. Triebfahrzeuge, Schienenfahrzeuge oder Personenwaggons, mit
- einem von einer Wand (14) umgebenen WC-Raum (12),
- wobei der WC-Raum (12) einen ersten WC-Teilraum (16) mit einer ersten Toilette (22) und einen zweiten WC-Teilraum (18) mit einer zweiten Toilette (32) aufweist,
- einem Zwischenraum (20) zwischen den beiden WC-Teilräumen (16,18),
- einer ersten Eingangstür (42) in der den WC-Raum (12) umgebenden Wand (14) für den Zugang zu dem Zwischenraum (20) und einer zweiten Eingangstür (44) in der den WC-Raum umgebenden Wand (14) für den Zugang zu dem zweiten WC-Teilraum (18), und
- einer in dem WC-Raum (12) angeordneten Trennwand (46) zur wahlweisen Abtrennung des Zwischenraums (20) gegenüber dem ersten WC-Teilraum (16) oder dem zweiten WC-Teilraum (18),
- wobei die Trennwand (46) zwischen einer ersten Verstellposition und einer zweiten Verstellposition verstellbar und in jeder der beiden Verstellpositionen arretierbar ist,
- wobei die Trennwand (46) in ihrer ersten Verstellposition den Zugang von dem Zwischenraum (20) zu dem ersten WC-Teilraum (16) hin freigibt und zu dem zweiten WC-Teilraum (18) hin versperrt und,
- wobei die Trennwand (46) in ihrer zweiten Verstellposition den Zugang von dem Zwischenraum (20) zu dem zweiten WC-Teilraum (18) hin freigibt und zu dem ersten WC-Teilraum (16) hin versperrt.

2. Konfigurierbare Anordnung nach Anspruch 1, **dadurch gekennzeichnet, dass** die verstellbare Trennwand (46) verschwenkbar ist und/oder linear oder längs einer gekrümmten Linie, insbesondere längs einer Teilkreislinie, verschiebbar ist und/oder klappbar ist.

3. Konfigurierbare Anordnung nach Anspruch 1 oder 2, **dadurch gekennzeichnet, dass** bei in der ersten Verstellposition befindlicher Trennwand (46) der erste WC-Teilraum (16) zusammen mit dem Zwischenraum (20) eine Universal-WC-Kabine für die Benutzung von bezüglich ihrer Mobilität eingeschränkten Personen, insbesondere von Personen mit Rollstuhl, bildet und der zweite WC-Teilraum (18) eine Normal/Standard-WC-Kabine bildet und dass bei in der zweiten Verstellposition befindlicher Trennwand (46) der zweite WC-Teilraum (18) zusammen mit dem Zwischenraum (20) eine Universal-WC-Kabine für die Benutzung von bezüglich ihrer Mobilität eingeschränkten Personen, insbesondere von Personen mit Rollstuhl, bildet.

4. Konfigurierbare Anordnung nach Anspruch 3, **dadurch gekennzeichnet, dass** der Zwischenraum (20) mindestens so groß ist wie der von Hindernissen freie Raum innerhalb einer Universal-WC-Kabine, insbesondere so groß ist wie der von Hindernissen freie Raum zwischen der Eingangstür und der Toilette einer Universal-WC-Kabine.

5. Konfigurierbare Anordnung nach einem der Ansprüche 1 bis 4, **dadurch gekennzeichnet, dass** der Zwischenraum (20) kreiszylindrisch ist, dass die Trennwand (46) bogenförmig und längs der gedachten Umfangswand des kreiszylindrischen Zwischenraums (20) verschiebbar und in den beiden Verstellpositionen arretierbar ist und dass die erste Eingangstür (42) eine bogenförmige, insbesondere teilkreislinienförmig gekrümmte, Schiebetür ist.

6. Konfigurierbare Anordnung nach Anspruch 5, **dadurch gekennzeichnet, dass** die Schiebetür längs der bogenförmigen Trennwand (46) in deren jeweiliger Verstellposition zum Öffnen und zum Schließen verschiebbar ist.

7. Konfigurierbare Anordnung nach einem der Ansprüche 1 bis 6, **dadurch gekennzeichnet, dass** die Trennwand (46) und die erste Eingangstür (42) jeweils eine separate Führungsvorrichtung zum Verschieben der Trennwand (46) zwischen deren beiden Verstellpositionen und zum Verschieben der ersten Eingangstür (42) zwecks Öffnens und Schließens derselben aufweisen.

8. Konfigurierbare Anordnung nach einem der Ansprüche 1 bis 4, **dadurch gekennzeichnet, dass** die Trennwand (46) eben ist und innerhalb des WC-Raums (12) zwischen den beiden Verstellpositionen entlang von Führungselementen parallel oder seitlich verschiebbar ist.

9. Konfigurierbare Anordnung nach einem der Ansprüche 1 bis 4, **dadurch gekennzeichnet, dass** die Trennwand (46) in dem WC-Raum (12) vorzugsweise innerhalb von dessen der ersten Eingangstür (42) gegenüberliegenden Abschnitt (52) schwenkbar gelagert oder nach Art einer Anschlagtür ausgebildet ist und zwischen den beiden Verstellpositionen verschwenkbar und insbesondere bzgl. ihrer Breite veränderbar ist.

10. Konfigurierbare Anordnung nach einem der Ansprüche 1 bis 9, **dadurch gekennzeichnet, dass** seitlich beider Toiletten (22,32) jeweils zumindest eine verschwenkbare, wahlweise von der Wand (14) abstehende oder an die Wand (14) geklappte, Stützstange (30) angeordnet ist oder dass beidseitig beider Toiletten (16,18) jeweils zwei Stützstangen (28,30) angeordnet sind, von denen die eine verschwenkbar und wahlweise von der Wand (14) abstehend oder an die Wand (14) klappbar ist und die andere feststehend angeordnet ist.

11. Konfigurierbare Anordnung nach einem der Ansprüche 1 bis 10, **dadurch gekennzeichnet, dass** die zweite Eingangstür (44) eine Anschlagtür oder eine Schiebetür oder eine Falttür ist.

12. Konfigurierbare Anordnung nach einem der Ansprüche 1 bis 11, **dadurch gekennzeichnet, dass** die Abschnitte (48,50) der den WC-Raum (12) umgebenden Wand (14) beidseitig der ersten Eingangstür (42) zu dieser hin schräg zum Inneren des WC-Raums (12) gerichtet verlaufen, womit der Zwischenraum (20) bei geöffneter erster Eingangstür, insbesondere für Personen mit Rollstuhl bequemer zugänglich ist.
